# EUROPÄISCHE PATENTSCHRIFT

(11) **EP 0 965 078 B1**
(45) Veröffentlichungstag und Bekanntmachung des Hinweises auf die Patenterteilung: **17.04.2002**
(21) Anmeldenummer: 98906839.0
(22) Anmeldetag: 23.01.1998
(51) Int. Cl.: G06F 1/18, G11B 33/08, G11B 33/12

(54) **TRÄGERANORDNUNG FÜR ELEKTRONISCHE BAUGRUPPEN**
HOLDING SYSTEM FOR ELECTRONIC COMPONENTS
DISPOSITIF DE SUPPORT POUR COMPOSANTS ELECTRONIQUES

(30) Priorität: 04.03.1997 DE 19708775
(43) Veröffentlichungstag der Anmeldung: 22.12.1999
(73) Patentinhaber: Fujitsu Siemens Computers GmbH, 81739 München (DE)
(72) Erfinder: FLOTHO, Helmut, D-33181 Fürstenberg (DE); KNOOP, Franz-Josef, D-33142 Büren (DE)
(74) Vertreter: Epping Hermann & Fischer
(86) Internationale Anmeldenummer: DE9800212
(87) Internationale Veröffentlichungsnummer: WO9839704

(56) Entgegenhaltungen:
- US-A- 5 004 207
- US-A- 5 216 582
- "FRICTIONAL - ELASTOMERIC SHOCKMOUNT SYSTEM FOR MECHANICAL ISOLATIONOF A FRAGILE DEVICE FROM SOURCES OF VIBRATION AND SHOCK" IBM TECHNICAL DISCLOSURE BULLETIN, Bd. 33, Nr. 9, 1.Februar 1991, Seiten 53-57, XP000119756
- "3-DEGREE OF FREEDOM FLEX CABLE DESIGN TO FACILITATE SUB-ASSEMBLY SHOCK ISOLATION;INCLUDING A DIRECT ACCESS STORAGE DEVICE UNIT" IBM TECHNICAL DISCLOSURE BULLETIN, Bd. 36, Nr. 12, 1.Dezember 1993, Seite 595/596 XP000419080

## Beschreibung

Die Erfindung betrifft eine Trägeranordnung für elektronische Baugruppen, insbesondere Magnetplattenlaufwerke mit einem in einen Laufwerksschacht eines elektronischen Datenverarbeitungsgerätes, insbesondere eines PC's, Server's oder einer Peripheriegeräteeinheit einschiebbaren Einschubrahmen, dessen Länge der Tiefe des Laufwerksschachtes entspricht.

Zum Einschub in einen Laufwerksschacht beispielsweise eines PCs bestimmte elektronische Baugruppen sind zwar in ihren Außenabmessungen so weit genormt, daß sie in den Laufwerksschacht-Querschnitt passen, jedoch kann die in Einschubrichtung gemessene Länge der Baugruppen unterschiedlich sein. Auch gibt es z.B. Laufwerke, die einen Stecker tragen, mit dem sie direkt an die Geräterückwand des elektronischen Datenverarbeitungsgerätes angesteckt werden können, während andere, insbesondere für den Einsatz in PC's vorgesehene Laufwerke mit Speicherplatten desselben Durchmessers zu den Steckern auf der Geräterückwand inkompatible Stecker tragen und deshalb indirekt über eine flexible Leiteranordnung und einen mit dieser verbundenen Stecker mit der Geräteelektronik verbindbar sind. Dies führt dazu, daß die Laufwerke an unterschiedlichen Stellen im Einschubrahmen befestigt werden müssen.

In der US 5 596 484 ist bereits ein Montagesatz für die Montage eines Diskettenlaufwerks in einem für ein größeres elektronisches Gerät bestimmten Aufnahmeschacht beschrieben. Dieser weist zwei Montageschienen mit U-förmigem Querschnittsprofil auf. An beide Seitenwände des Diskettenlaufwerks wird eine solche Schiene mit einem U-Schenkel festgeschraubt. Dazu sind in dem an der Seitenwand anliegenden U-Schenkel Befestigungslöcher vorgesehen, durch die hindurch Befestigungsschrauben in das Diskettenlaufwerks-Gehäuse eingeschraubt werden. In den anderen U-Schenkel sind vergrößerte Durchbrüche eingebracht, die den Durchtritt des Schraubenkopfes gestatten. Dieser U-Schenkel ist auch mit Gewindelöchern versehen, in die weitere Schrauben für Befestigung des Diskettenlaufwerks in dem Aufnahmeschacht eingeschraubt werden. Die Montageschienen stehen nach hinten über das Diskettenlaufwerk über. In dem überstehenden Bereich ist zwischen die einander gegenüberstehenden U-Schenkel der beiden Montageschienen eine Leiterplatte eingesetzt, die auf der dem Diskettenlaufwerk zugewandten Seite einen mit letzterem zu verbindenden Stecker und auf der dazu parallelen Seite einen Verbindungsstecker zum Aufnahmeschacht trägt.

Der Erfindung liegt die Aufgabe zugrunde, eine Trägeränordnung der eingangs genannten Art anzugeben, mit der eine einfache Montage unterschiedlicher Baugruppen an dem Einschubrahmen und eine einfache Einstellung des Funktionsmaßes möglich ist, das durch den Abstand zwischen dem zur Verbindung mit der Geräterückwand bestimmten Stecker des Einschubes und einem an der entgegengesetzten Seite des Einschubrahmens angeordneten Entriegelungshebel gegeben ist.

Diese Aufgabe wird erfindungsgemäß durch einen U-förmigen Bügel gelöst, in dessen U-Schenkel erste Löcher zum Durchtritt von ersten Befestigungselementen zur Befestigung des Bügels an parallel zur Einschubrichtung gerichteten Seitenflächen der Baugruppe und zweite Löcher zum Durchtritt von zweiten Befestigungsmitteln zum Befestigen des Bügels an dem Einschubrahmen ausgebildet sind.

Der Bügel ist ein im Vergleich zu dem Einschubrahmen preiswert und einfach herzustellendes Teil. Es können entweder mehrere derartige an die jeweiligen Baugruppen angepaßte Bügel vorgesehen sein oder es kann vorzugsweise ein Bügel verwendet werden, der die den jeweiligen zu montierenden Baugruppen entsprechenden ersten Befestigungslöcher hat. Damit braucht der Einschubrahmen selbst nicht an die jeweiligen Baugruppen angepaßt zu werden.

Bei einer besonders bevorzugten Ausführungsform, die zumindest zwei unterschiedliche Montagepositionen für Baugruppen bietet, sind die ersten Löcher bezüglich der Längsmitte der U-Schenkel unsymmetrisch angeordnet. Wird der Bügel einmal so montiert, daß sein U-Quersteg zur Geräterückwand weist, und einmal in der entgegengesetzten Stellung mit dem Einschubrahmen verbunden, so haben die ersten Befestigungslöcher in den beiden Stellungen des Bügels unterschiedliche Abstände von den der Geräterückwand zugekehrten Ende des Einschubrahmens. Dies bietet die Möglichkeit, elektronische Baugruppen unterschiedlicher Länge oder mit unterschiedlichen Abständen von dem der Geräterückwand zugekehrten Ende des Einschubrahmens zu montieren.

Vorzugsweise sind die ersten Löcher glatte Bohrungen, wogegen die zweiten Löcher beispielsweise ein Innengewinde haben. Dies bietet die Möglichkeit einerseits den Bügel an der Baugruppe anzuschrauben und andererseits den Einschubrahmen bequem an dem mit der Baugruppe verbundenen Bügel anzuschrauben. Dabei können die den zweiten Löchern zugeordneten Durchbrechungen im Einschubrahmen als Langlöcher ausgebildet sein, deren Längsachse parallel zur Einschubrichtung verläuft. Dies bietet eine zusätzliche Möglichkeit der Justierung der Baugruppe in Einschubrichtung relativ zum Einschubrahmen.

Am U-Quersteg des Bügels können Befestigungslöcher zum Befestigen eines Steckers vorgesehen sein, der zur elektrischen Verbindung mit der Geräterückwand bestimmt ist. Damit benötigt man keinen eigenen Träger oder Befestigungslaschen für den Stecker, wenn dieser nicht an der Baugruppe selbst befestigt sondern mit der Baugruppe über flexible Leiter verbunden ist.

Der Einschubrahmen kann beispielsweise von einem quaderförmigen Gehäuse gebildet sein, dessen eine parallel zur Einschubrichtung gerichtete Gehäusewand an ihren zur Einschubrichtung parallelen Rändern so über die angrenzenden Gehäusewände hinausragt, daß das Gehäuse mit den Rändern in die Führungsschienen des Laufwerksschachtes einschiebbar ist. Das Gehäuse dient nicht nur dem mechanischen Schutz der Baugruppe, sondern kann auch als elektronische Abschirmung ausgebildet sein.

Bestimmte Baugruppen sind stoß- oder schwingungsempfindlich. Dies gilt insbesondere für Plattenlaufwerke. Beim Einsatz von Festplattenwerken der neueren Generation hat sich gezeigt, daß die dynamischen Eigenschaften des Einschubrahmens und des Gerätechassis einen starken Einfluß auf die Funktionssicherheit des Laufwerkes haben. Magnetplattenlaufwerke der neueren Generation sind sehr viel empfindlicher gegenüber Vibrationen, da die Erhöhung der Speicherkapazität solcher Plattenlaufwerke immer auch über eine Vergrößerung der Spurdichte erreicht wird.

Zum Beseitigen dieses Problems und zur Erhöhung der Betriebssicherheit im Hinblick auf Vibrationen wird daher erfindungsgemäß vorgeschlagen, daß die ersten und/oder die zweiten Befestigungselemente zumindest in ihrem die U-Schenkel und/oder ein Rahmenelement durchsetzenden Bereich von aus einem elastischen Material bestehenden Dämpfungselementen umgeben sind. Diese Dämpfungselemente verhindern, daß die Vibrationen an den Befestigurigsstellen zwischen dem Einschubrahmen und den Laufwerken unmittelbar übertragen werden. Zweckmäßigerweise haben die Dämpfungselemente mindestens einen zur Anlage an einer U-Schenkelfläche bestimmten Flansch und eine in das betreffende Loch eingreifenden Halteabschnitt. Bei einer einfach und sicher zu montierenden Ausführungsform der Dämpfungselemente umfassen diese zwei zueinander parallele durch das Halteelement miteinander verbundene Flansche. Die Dämpfungselemente können wie eine Kabeltülle, die zur Durchführung von Kabeln durch Blechwände verwendet werden, montiert werden, indem man einen der Flansche zusammendrückt und durch das betreffende Loch schiebt. Auf der anderen Seite des U-Schenkels federt der Flansch wieder auf, so daß das Dämpfungselement fest in dem betreffenden Loch sitzt. Es versteht sich, daß der Durchmesser des Loches an die Stärke des Halteabschnittes angepaßt werden muß. Die Montage kann auch weiter noch dadurch erleichtert werden, daß die Dämpfungselemente bereits fest mit den Befestigungselementen verbunden sind.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Figur 1: eine schematische perspektivische Ansicht eines erfindungsgemäßen Bügels,
- Figur 2: eine Seitenansicht eines gehäuseförmigen Einschubrahmens mit einem montierten Magnetplattenlaufwerk, wobei ein Teil der Seitenwand entfernt ist,
- Figur 3: eine Draufsicht auf den in Figur 2 dargestellten Einschubrahmen in Richtung des Pfeiles A in Figur 2, wobei Teile der Deckfläche weggebrochen sind,
- Figur 4: eine Seitenansicht des in den Figuren 2 und 3 dargestellten Einschubrahmens in Richtung des Pfeiles B in Figur 3,
- Figur 5: eine der Figur 2 entsprechende Ansicht eines Einschubrahmens mit einem anderen Plattenlaufwerk und dem Bügel in einer um 180° gedrehten Montagestellung,
- Figur 6: eine schematische perspektivische Explosionsdarstellung zur Erläuterung der Montage eines Laufwerkes an einem Montagebügel unter Verwendung von Dämpfungselementen,
- Figur 7: einen Schnitt durch eine in der Anordnung gemäß Figur 6 verwendetes Dämpfungselement,
- Figur 8: eine teilweise geschnittene Draufsicht auf einen Bügel gemäß einer weiteren Ausführungsform der Erfindung,
- Figur 9: eine schematische Draufsicht auf ein Laufwerk, das mit zu dem Bügel gemäß Figur 8 gehörenden Befestigungselementen versehen ist und
- Figur 10: eine schematische Seitenansicht eines in Figur 9 verwendeten Befestigungselementes im vergrößerten Maßstab.

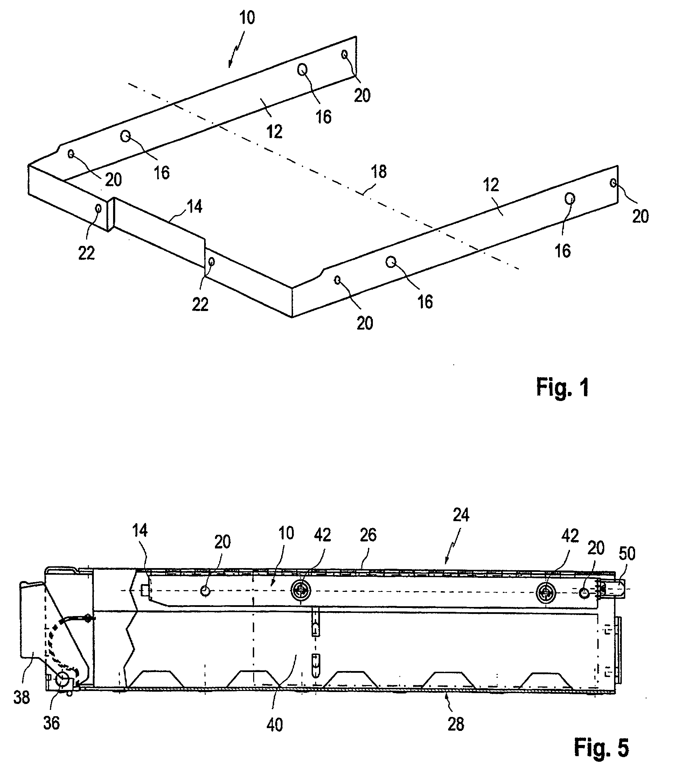

Figur 1 zeigt einen allgemein mit 10 bezeichneten U-förmigen Montagebügel, der zur Montage einer elektronischen Baugruppe, insbesondere eines Plattenlaufwerkes in einem Einschubrahmen bestimmt ist. Der Montagebügel 10 besteht aus einem Blechstreifen und hat zwei zueinander parallele U-Schenkel 12, die über einen U-Quersteg 14 miteinander verbunden sind. In den U-Schenkeln 12 sind erste Befestigungslöcher 16 vorgesehen, die zum Durchstecken von Befestigungselementen, beispielsweise Schrauben dienen, mit denen der Montagebügel 10 an einem Laufwerk angeschraubt werden kann. Wie man in Figur 1 erkennt, sind die Befestigungslöcher 16 unsymmetrisch bezüglich der durch eine strichpunktierte Linie 18 wiedergegebenen Längsmittelachse der U-Schenkel 12 angeordnet.

In den U-Schenkeln 12 sind ferner zweite Befestigungslöcher 20 ausgebildet, die der Befestigung des U-Bügels 10 an dem Einschubrahmen dienen. Diese Löcher 20 können mit einem Gewinde versehen sein.

Der U-Quersteg 14 hat ebenfalls zwei Gewindebohrungen 22, mit deren Hilfe ein Stecker an dem U-Quersteg befestigt werden kann, der ein Anstecken der in dem Montagebügel 10 montierten Baugruppe an einer Geräterückwand eines Datenverarbeitungsgerätes ermöglicht, wie dies im weiteren noch erläutert wird.

Die Figuren 2 bis 4 zeigen die Verwendung des in Figur 1 dargestellten Montagebügels in einem Einschubrahmen gemäß einer ersten Ausführungsform der Erfindung. Der in den Figuren 2 bis 4 allgemein mit 24 bezeichnete Einschubrahmen besteht aus einem quaderförmigen Gehäuse mit einer Deckfläche 26, einer Bodenfläche 28, Seitenwänden 30 und 32 sowie einer Vorderwand 34. Die Rückwand ist offen. Die Deckfläche 26 und die Bodenfläche 28 sind von Lochblechen gebildet, um die Belüftung des eingeschlossenen Laufwerkes zu erleichtern. An der Vorderseite des Einschubrahmens 24 ist ein um eine Achse 36 schwenkbarer Entriegelungshebel 38 angelenkt, der das Herausziehen des Einschubrahmens 24 aus einem Gerät in bekannter Weise erleichtert. Die Bodenfläche 28 steht an ihren Längsrändern 39 über die angrenzenden Seitenwände 30, 32 über, so daß der Einschubrahmen 24 mit diesen Rändern 39 in die Führungsschienen des Laufwerkschachtes eines nicht dargestellten Baugruppenträgers eingeschoben werden kann.

In dem Einschubrahmen 24 ist mit Hilfe des in Figur 1 dargestellten Montagebügels 10 ein Laufwerk 40 montiert. der Montagebügel 10 ist dabei an dem Laufwerk 40 mit Hilfe von Schrauben 42 angeschraubt, welche die ersten Befestigungslöcher 16 durchsetzen. An den Seitenwänden 30 und 32 des Einschubrahmens 24 ist der Montagebügel 10 mit Hilfe von Schrauben 44 befestigt, welche Langlöcher 46 in den Seitenwänden 30 und 32 (Figur 4) durchsetzen und in die zweiten Befestigungslöcher 20 des Montagebügels eingreifen. Wie man in den Figuren 2 bis 4 erkennt, ist das montierte Laufwerk 40 nicht direkt an die Geräterückwand ansteckbar, sondern über eine flexible Leiteranordnung 48 mit einem Stecker 50 verbunden. Der Montagebügel 10 ist so angeordnet, daß sein U-Quersteg 14 nahe der Rückseite des Einschubrahmens 24 liegt und den Stecker 50 tragen kann, der über Schrauben 52 an dem U-Quersteg 14 befestigt ist (Figur 3). Die Langlöcher 46 in den Seitenwänden 30, 32 des Einschubrahmens 24 bieten die Möglichkeit, den Montagebügel 10 zusammen mit dem Laufwerk 40 so innerhalb des Einschubrahmens 24 zu positionieren, daß die Entfernung zwischen dem Stecker 50 und dem Entrieglungshebel 38, das sogenannte Funktionsmaß, exakt auf die Länge oder Tiefe des Laufwerksschachtes abgestimmt ist.

Figur 5 zeigt die Verwendung des in Figur 1 dargestellten Montagebügels 10 für die Montage eines Laufwerkes 40, das direkt mit seinem Stecker 50 verbunden, d.h. direkt an die Geräterückwand ansteckbar ist. In diesem Falle ist der Montagebügel 10 um 180° um die Längsmittelachse 18 der U-Schenkel 12 geklappt, so daß der U-Quersteg 14 zum Entriegelungshebel 38 hinweist. Das Laufwerk 40 rückt damit nahe an die Rückseite des Einschubrahmens 24 heran, so daß das Funktionsmaß wieder eingehalten ist und der Stecker 50 direkt an die Geräterückwand gesteckt werden kann. Der Montagebügel 10 und der Einschubrahmen 24 sind aber völlig identisch mit den bei der Anordnung gemäß den Figuren 2 bis 4 verwendeten Teilen.

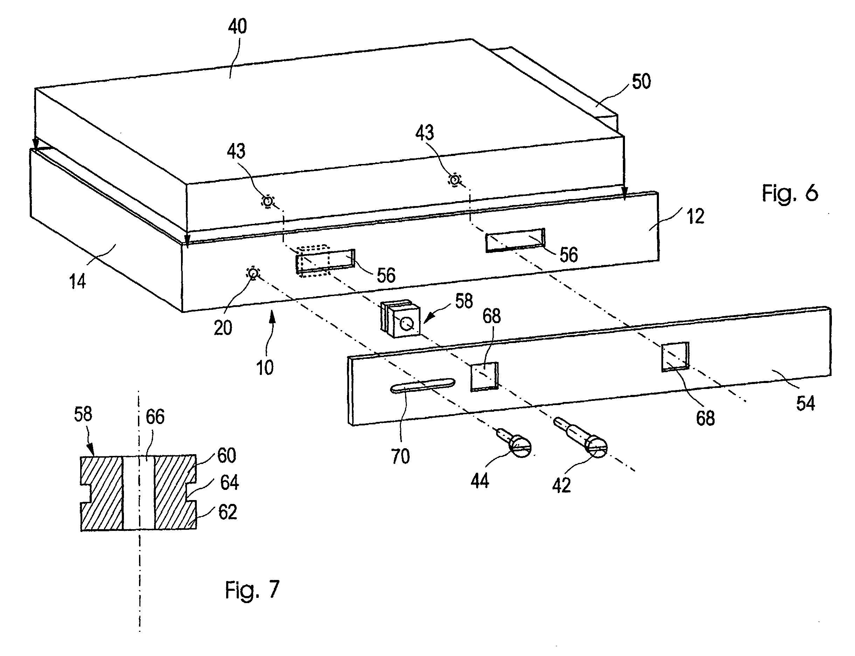

Wie bereits oben erläutert wurde, besteht die Gefahr, daß bei Laufwerken die Betriebssicherheit durch Vibrationen beeinträchtigt wird. Hierbei spielt die Befestigung der Laufwerke in dem Einschubrahmen eine erhebliche Rolle. Um die Laufwerke hinsichtlich der Vibrationen besser von dem Einschubrahmen trennen zu können, sind erfindungsgemäß Dämpfungselemente im Bereich der Befestigungspunkte vorgesehen. Dies soll anhand der schematischen Darstellung der Figur 6 erläutert werden. Gleiche Teile sind wieder mit gleichen Bezugszeichen versehen.

Der Einschubrahmen, an dem der Montagebügel 10 befestigt werden kann, ist dabei nur durch eine Schiene 54 angedeutet. Die ersten Befestigungslöcher in den U-Schenkeln 12 des Montagebügels 10 sind im vorliegenden Fall von rechteckigen Ausnehmungen 56 gebildet. In diese Ausnehmungen wird jeweils ein Dämpfungselement 58 eingesetzt. Dieses besteht aus zwei Flanschen 60, 62, deren Außenmaß größer als die Länge der kleineren Rechteckseite der Aussparungen 56 ist. Die Flansche 60 und 62 sind durch einen Halteabschnitt 64 miteinander verbunden, dessen Außenmaß etwa dem Lichtmaß der kleineren Rechteckseite der Aussparungen 56 entspricht. Das gesamte Dämpfungselement hat eine zentrale Bohrung 66, durch die eine als Ansatzschraube ausgebildete Befestigungsschraube 42 zur Verbindung des Montagerahmens 10 mit dem Laufwerk 40 gesteckt und in ein Gewindeloch 43 eingeschraubt werden kann. Der Ansatz der Schraube 42 ist also vollständig von dem elastischen Material des Dämpfungselementes 58 umgeben, ohne dieses zusammenzupressen. Das in den Figuren 6 und 7 dargestellte Dämpfungselement kann nach Art einer Kabeltülle, die zum Durchführen eines Kabels durch eine Wandöffnung dient, montiert werden, indem man einen der Flanschen 60, 62 zusammendrückt und durch die Aussparung 56 steckt. Nach dem Durchstecken federt der zusammengedrückte Flansch wieder auf, so daß die Ränder der Aussparung 56 zwischen den beiden Flanschen 60, 62 des Dämpfungselementes 58 eingefaßt werden. Zur richtigen Positionierung kann das Dämpfungselement in den rechteckigen Aussparungen 56 verschoben werden.

Die Leiste 54 hat eine rechteckige Aussparung 68, in die das Dämpfungselement 58 paßt. In der Leiste 54 sind ferner den Löchern 20 in dem Montagebügel 10 zugeordnete Langlöcher 70 ausgebildet, durch welche die Befestigungsschrauben 44 zum Verbinden der Leiste 54 mit dem U-Schenkel 12 gesteckt werden können. Durch die Dämpfungselemente können das Laufwerk 40 und die es haltende Trägeranordnung somit hinsichtlich der dynamischen Eigenschaften entkoppelt werden.

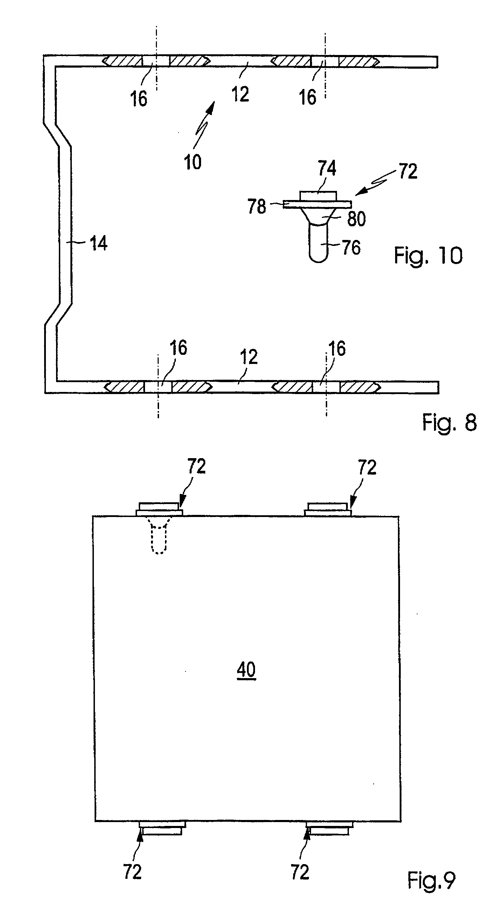

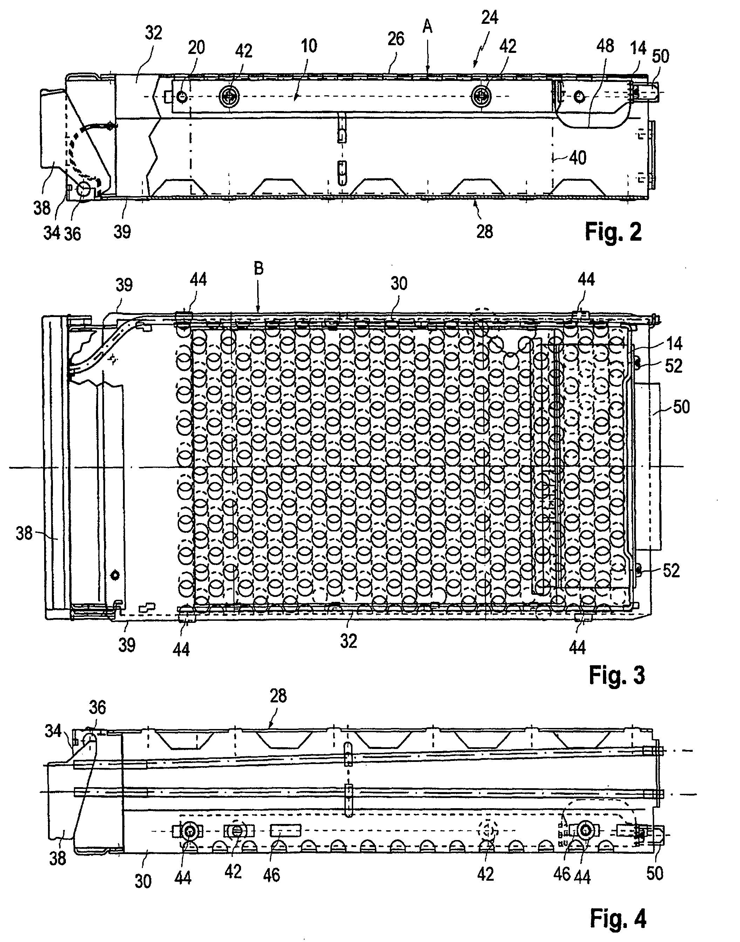

Eine hinsichtlich der Montage besonders einfache Lösung einer schwingungsgedämpften Verbindung zwischen dem Montagebügel 10 und dem Laufwerk 40 ist in den Figuren 8 bis 10 dargestellt. Die Verbindung erfolgt über Befestigungselemente 72, von denen eines in Figur 10 in vergrößertem Maßstab dargestellt ist. Jedes Befestigungselement umfaßt einen Bolzen mit einem Kopfteil 74 aus einem elastischen Material, in den ein starrer Schaftteil 76 eingegossen ist. An den Kopfteil 74 ist eine ebenfalls elastische Dämpfungsscheibe 78 angeformt. Das elastische Material geht auf seiner dem Kopf 74 fernen Seite in eine konische Hülse 80 über, welche einen Teil des Schaftes 76 umschließt. Der Schaftteil 76 des Befestigungselementes 72 wird in die Gewindebohrung 43 in dem Laufwerk 40 eingedrückt, so daß die Dämpfungsscheibe 78 an der Wand des Laufwerkes 40 anliegt, wie dies in Figur 9 dargestellt ist. Das mit den Befestigungselementen 72 versehene Laufwerk 40 wird dann zwischen die U-Schenkel 12 des Montagebügels 10 gesetzt, wobei die Kopfteile 74 der Befestigungselemente 72 in die an den Durchmesser der Kopfteile 74 angepaßten ersten Löcher 16 in den U-Schenkeln 12 einrasten. Das Laufwerk 40 wird somit in den Montagebügel 10 gleichsam eingeknöpft. Da der U-Bügel anschließend in den Einschubrahmen eingesetzt und an diesem befestigt wird, besteht keine Gefahr, daß sich das Laufwerk 40 durch Auffedern der U-Schenkel 12 von dem Montagebügel 10 lösen könnte.

## Patentansprüche

1. Trägeranordnung für elektronische Baugruppen, insbesondere Magnetplattenlaufwerke (40) mit einem in einen Laufwerksschacht eines elektronischen Datenverarbeitungsgerätes, insbesondere eines PCs einschiebbaren Einschubrahmen (24), dessen Länge der Tiefe des Laufwerksschachtes entspricht, **gekennzeichnet durch** einen U-förmigen Bügel (10) zur Montage und Anpassung unterschiedlicher solcher Baugruppen (40) an den Einschubrahmen (24), wobei die jeweilige Baugruppe (40) zwischen den in Einschubrichtung verlaufenden U-Schenkeln (12) angeordnet ist, und wobei in den U-Schenkeln (12) erste Löcher (16) zum Durchtritt von ersten Befestigungselementen (42) zur Befestigung des Bügels (10) an parallel zur Einschubrichtung gerichteten Seitenflächen der Baugruppe (40) und zweite Löcher (20) zum Durchtritt von zweiten Befestigungselementen (44) zum Befestigen des Bügels (10) an dem Einschubrahmen (24) ausgebildet sind.

2. Trägeranordnung nach Anspruch 1, **dadurch gekennzeichnet, daß** die ersten Löcher (16) bezüglich der Längsmitte (18) der U-Schenkel (12) unsymmetrisch angeordnet sind.

3. Trägeranordnung nach Anspruch 1 oder 2, **dadurch gekennzeichnet, daß** am U-Quersteg (14) des Bügels (10) Befestigungslöcher (22) zum Befestigen eines Steckers (50) vorgesehen sind, der zur elektrischen Verbindung der Baugruppe (40) mit einer Geräterückwand bestimmt ist.

4. Trägeranordnung nach einem der Ansprüche 1 bis 3, **dadurch gekennzeichnet, daß** die ersten Löcher (16) glatte Bohrungen sind und daß die zweiten Löcher (20) ein Innengewinde haben.

5. Trägeranordnung nach Anspruch 4, **dadurch gekennzeichnet, daß** den zweiten Löchern (20) zugeordnete Durchbrechungen in dem Einschubrahmen (24) als Langlöcher (46) ausgebildet sind, deren Längsachse parallel zur Einschubrichtung verläuft.

6. Trägeranordnung nach einem der Ansprüche 1 bis 3, **dadurch gekennzeichnet, daß** die ersten Löcher als Langlöcher (56) ausgebildet sind, deren Längsachse parallel zur Einschubrichtung verläuft.

7. Trägeranordnung nach einem der Ansprüche 1 bis 6, **dadurch gekennzeichnet, daß** der Einschubrahmen (24) von einem quaderförmigen Gehäuse gebildet ist, dessen eine parallel zur Einschubrichtung gerichtete Gehäusewand (28) an ihren zur Einschubrichtung parallelen Rändern so über die angrenzenden Gehäusewände (30, 32) hinausragt, daß das Gehäuse mit diesen Rändern in die Führungsschienen des Laufwerkschachtes einschiebbar ist.

8. Trägeranordnung nach einem der Ansprüche 1 bis 7, **dadurch gekennzeichnet, daß** die ersten und/oder die zweiten Befestigungselemente (42; 44) zumindest in ihrem die U-Schenkel (12) und/oder ein Rahmenelement (54) durchsetzenden Bereich von aus einem elastischen Material bestehenden Dämpfungselementen (58) umgeben sind.

9. Trägeranordnung nach Anspruch 8, **dadurch gekennzeichnet, daß** die Dämpfungselemente (58) mindestens einen zur Anlage an einer U-Schenkelfläche bestimmten Flansch (60, 62) und einen in das betreffende Loch (56) eingreifenden Halteabschnitt (64) haben.

10. Trägeranordnung nach Anspruch 9, **dadurch gekennzeichnet, daß** die Dämpfungselement (58) zwei zueinander parallele, durch das Halteelement (64) miteinander verbundene Flansche (60, 62) haben.

11. Trägeranordnung nach einem der Ansprüche 8 bis 10, **dadurch gekennzeichnet, daß** die ersten Löcher (56) rechteckig ausgebildet sind.

12. Trägeranordnung nach Anspruch 8 oder 9, **dadurch gekennzeichnet, daß** die Dämpfungselemente (78, 80) fest mit den Befestigungselementen (74, 76) verbunden sind.

## Claims

1. Holding system for electronic modules, in particular magnetic disk drives (40), having a withdrawable frame (24) which can be inserted into a drive bay of an electronic data processing device, in particular a PC, and whose length corresponds to the depth of the drive bay, **characterized by** a U-shaped bracket (10) for mounting and adapting different such modules (40) to the withdrawable frame (24), the respective module (40) being arranged between the U limbs (12) running in the inserting direction, and there being formed in the U limbs (12) first holes (16) for the passage of first fastening elements (42) for fastening the bracket (10) on lateral surfaces, directed parallel to the inserting direction, of the module (40), and second holes (20) for the passage of second fastening elements (44) for fastening the bracket (10) on the withdrawable frame (24).

2. Holding system according to Claim 1, **characterized in that** the first holes (16) are arranged asymmetrically with respect to the longitudinal bisector (18) of the U limbs (12).

3. Holding system according to Claim 1 or 2, **characterized in that** fastening holes (22) are provided on the U cross-web (14) of the bracket (10) for fastening a plug (50) which is intended to connect the module (40) electrically to a rear wall of the device.

4. Holding system according to one of Claims 1 to 3, **characterized in that** the first holes (16) are smooth bores, and **in that** the second holes (20) have an internal thread.

5. Holding system according to Claim 4, **characterized in that** cutouts assigned to the second holes (20) are formed in the withdrawable frame (24) as elongated holes (46) whose longitudinal axis runs parallel to the inserting direction.

6. Holding system according to one of Claims 1 to 3, **characterized in that** the first holes are formed as elongated holes (56) whose longitudinal axis runs parallel to the inserting direction.

7. Holding system according to one of Claims 1 to 6, **characterized in that** the withdrawable frame (24) is formed by a cuboid housing of which one housing wall (28), directed parallel to the inserting direction, projects beyond the adjacent housing walls (30, 32) at its edges parallel to the inserting direction in such a way that the housing can be inserted with these edges into the guide rails of the drive bay.

8. Holding system according to one of Claims 1 to 7, **characterized in that** the first and/or the second fastening elements (42; 44) are surrounded by damping elements (58) consisting of an elastic material, at least in their region penetrating the U limbs (12) and/or a frame element (54).

9. Holding system according to Claim 8, **characterized in that** the damping elements (58) have at least one flange (60, 62) intended for bearing against a U limb surface, and a holding section (64) engaging in the relevant hole (56).

10. Holding system according to Claim 9, **characterized in that** the damping element [sic] (58) have two mutually parallel flanges (60, 62) interconnected by the holding element (64).

11. Holding system according to one of Claims 8 to 10, **characterized in that** the first holes (56) are of rectangular construction.

12. Holding system according to Claim 8 or 9, **characterized in that** the damping elements (78, 80) are permanently connected to the fastening elements (74, 76).

## Revendications

1. Dispositif de support pour des modules électroniques, notamment lecteur (40) de disque magnétique, comportant un cadre (24) à tiroir qui peut être inséré dans un puits de lecteur d'un appareil électronique de traitement de données, notamment d'un ordinateur personnel, et dont la longueur correspond à la profondeur du puits de lecteur, **caractérisé par** un étrier (10) en forme de U pour monter sur le cadre (24) à tiroir et y adapter des modules (40) différents de ce genre, le module (40) associé étant monté entre les branches (12) de U s'étendant dans la direction d'insertion, et des premiers trous (16) étant ménagés dans les branches (12) de U pour le passage de premiers éléments (42) de fixation servant à la fixation de l'étrier (10) à des faces latérales du module (40) orientées parallèlement à la direction d'insertion et des deuxièmes trous (20) étant ménagés dans les branches (12) de U pour le passage de deuxièmes éléments (44) de fixation pour la fixation de l'étrier (10) au cadre (24) à tiroir.

2. Dispositif de support suivant la revendication 1, **caractérisé en ce que** les premiers trous (16) sont disposés de façon dissymétrique par rapport au milieu (18) de la longueur des branches (12) de U.

3. Dispositif de support suivant la revendication 1 ou 2, **caractérisé en ce qu'**il est prévu sur l'âme (14) de U de l'étrier (10) des trous (22) de fixation pour fixer un connecteur (50) qui est prévu pour la liaison électrique du module (40) à un fonds de panier d'appareil.

4. Dispositif de support suivant l'une des revendications 1 à 3, **caractérisé en ce que** les premiers trous (16) sont des trous lisses et **en ce que** les deuxièmes trous (20) ont un taraudage.

5. Dispositif de support suivant la revendication 4, **caractérisé en ce qu'**il est ménagé dans le cadre (24) à tiroir, comme trous (46) oblongs, des passages qui sont associés aux deuxièmes trous (20) et dont l'axe longitudinal s'étend parallèlement à la direction d'insertion.

6. Dispositif de support suivant l'une des revendications 1 à 3, **caractérisé en ce que** les premiers trous sont réalisés en trous (56) oblongs dont l'axe longitudinal s'étend parallèlement à la direction d'insertion.

7. Dispositif de support suivant l'une des revendications 1 à 6, **caractérisé en ce que** le cadre (24) à tiroir est formé d'un boîtier parallélépipédique dont une paroi (28) de boîtier dirigée parallèlement à la direction d'insertion fait saillie sur ses bords parallèles à la direction d'insertion des parois (30, 32) de boîtier adjacentes, de telle manière que le boîtier peut être enfilé par ses bords dans les glissières de guidage du puits de lecteur.

8. Dispositif de support suivant l'une des revendications 1 à 7, **caractérisé en ce que** les premiers et/ou les deuxièmes éléments (42 ; 44) de fixation sont entourés, au moins dans leur région traversant les branches (12) de U et/ou un élément (54) de cadre, d'éléments (58) d'amortissement constitués de matériau élastique.

9. Dispositif de support suivant la revendication 8, **caractérisé en ce que** les éléments (58) d'amortissement ont au moins un flasque (60, 62) prévu pour l'application à une face des branches de U et une partie (64) de maintien rentrant dans le trou (64) concerné.

10. Dispositif de support suivant la revendication 9, **caractérisé en ce que** les éléments (58) d'amortissement ont deux flasques (60, 62) parallèles l'un à l'autre, reliés l'un à l'autre par l'élément (64) de maintien.

11. Dispositif de support suivant l'une des revendications 8 à 10, **caractérisé en ce que** les premiers trous (56) sont réalisés en rectangle.

12. Dispositif de support suivant la revendication 8 ou 9, **caractérisé en ce que** les éléments (78, 80) d'amortissement sont reliés de manière fixe aux éléments (74, 76) de fixation.
